# FASCICULE DE BREVET EUROPEEN

(11) **EP 3 235 255 B1**
(45) Date de publication et mention de la délivrance du brevet: **11.09.2024**
(21) Numéro de dépôt: 15817973.9
(22) Date de dépôt: 07.12.2015
(51) Int. Cl.: H04N 21/436, H04N 21/458, H04N 21/475, H04N 21/61, H04N 21/41

(54) **DISPOSITIF ET PROCEDE DE GESTION DES PRIORITES POUR LE TELECHARGEMENT DE CONTENUS MULTIMEDIA**
VORRICHTUNG UND VERFAHREN ZUR PRIORITÄTSVERWALTUNG ZUM HERUNTERLADEN VON MULTIMEDIA INHALTEN
DEVICE AND PROCESS FOR MANAGING PRIORITIES FOR MULTIMEDIA CONTENT DOWNLOADING

(30) Priorité: 19.12.2014 FR 1462884
(43) Date de publication de la demande: 25.10.2017
(73) Titulaire: Orange, 92130 Issy-les-Moulineaux (FR)
(72) Inventeur: LEDUBY, Jean-Bernard, 22430 Erquy (FR); CONAN, Martin, 35510 Cesson Sevigne (FR)
(86) Numéro de dépôt international: PCT/FR2015/053360
(87) Numéro de publication internationale: WO 2016/097530

(56) Documents cités:
- EP-A1- 2 525 530
- WO-A2-2007/067974
- WO-A2-2012/009095
- US-A1- 2003 156 218
- US-A1- 2011 013 091
- US-A1- 2014 152 899
- US-A1- 2014 317 650

## Description

### Domaine technique

L'invention s'applique à la restitution d'un contenu multimédia numérique sur un dispositif doté d'une fonction de restitution, dit dispositif de restitution, ou plus simplement téléviseur, au moyen d'un dispositif spécifique, dit dispositif de téléchargement, prévu pour accéder aux contenus sur le réseau Internet et les transmettre au téléviseur.

L'invention s'applique tout particulièrement à la restitution de tels contenus via un tel dispositif de téléchargement progressif par plusieurs utilisateurs du même réseau local.

### Etat de la technique

Il est usuel de restituer sur un dispositif quelconque d'un utilisateur, par exemple un téléviseur ou une tablette numérique, des contenus multimédia numériques (vidéo, audio, etc.) en provenance du réseau Internet. Par contenu numérique, on entend des films, des vidéos, ou de manière plus générale tout type de contenu multimédia numérique qui peut être transmis dans le réseau Internet considéré. On parle aussi de contenus reçus en « streaming » ou « streamés » pour indiquer par là qu'ils sont reçus par un téléchargement continu en provenance du réseau Internet large bande, en anglais WAN, acronyme de *Wide Area Network* par opposition au LAN (*Local area Network*) de portée locale, et peuvent être restitués en temps réel sur un terminal de l'utilisateur.

Pour recevoir le contenu numérique, le terminal émet généralement une requête à destination d'un serveur qui se trouve dans le WAN, en indiquant une adresse du contenu souhaité, et il reçoit en retour un flux de données numériques relatives à ce contenu.

La restitution consiste à fournir, au niveau du dispositif de restitution, le contenu numérique sous une forme accessible à l'utilisateur. Par exemple, des données reçues correspondant à une vidéo numérique sont généralement décodées, puis restituées au niveau d'un téléviseur, sous la forme d'un affichage, ou visualisation, de la vidéo correspondante avec sa bande-son associée.

Un téléviseur peut être prévu pour accéder lui-même aux contenus *streamés* sur le WAN. On parle, dans ce cas, de télévision « connectée », c'est-à-dire que le TV peut être raccordée au réseau Internet afin de fournir un ensemble de services aux utilisateurs. Si la restitution ne s'effectue pas sous le contrôle d'un opérateur de service, on parle aussi dans ce cas de contenus de type OTT, acronyme de l'appellation anglaise « Over The Top ». La télévision OTT permet à un utilisateur d'un TV connecté au réseau Internet de restituer des chaînes numériques ou des contenus Web sur le téléviseur. Généralement, ce type de téléviseur « connecté » peut s'interfacer avec le réseau local de l'utilisateur et par là accéder à un serveur de contenus dans le réseau étendu. Dans ce cas, c'est le TV lui-même qui gère les téléchargements de contenus.

Si le TV n'est pas connecté, il est usuel d'y connecter un autre terminal, par exemple un ordinateur personnel (PC) ou un dispositif spécifique (sous forme par exemple de clé électronique) pour accéder aux contenus *streamés* d'Internet et les transmettre au téléviseur, via notamment son interface HDMI (de l'anglais *High Définition Multimedia Interface*), une interface de communication numérique apte à transmettre des signaux audio et vidéo non compressés avec une définition élevée, normalisée par le forum HDMI. Dans la suite, on appelle ce dispositif de téléchargement un « Dispositif de Téléchargement TV », abrégé DTTV, ou clé DTTV.

Il est connu d'utiliser un terminal de commande, par exemple un téléphone mobile (*smartphone*) ou une tablette numérique pour sélectionner des contenus numériques destinés à être joués sur le téléviseur. Si les contenus sont téléchargés via une clé DTTV connectée au téléviseur, le terminal de commande, jouant alors le rôle d'une télécommande, prend le contrôle de la clé DTTV pour lui donner les ordres appropriés relatifs au téléchargement (télécharger un contenu, en changer, faire une pause, avancer ou reculer dans le contenu, etc.)

Par exemple, le document US 2014/317650 A1 décrit un dispositif de téléchargement, comme une clé HDMI, qui peut être utilisée pour télécharger progressivement des contenus depuis Internet sous le contrôle d'un l'utilisateur à l'aide d'un téléphone mobile.

Cependant, dans un tel contexte, si plusieurs utilisateurs potentiels du téléviseur souhaitent visualiser un contenu numérique au même moment, ceci pose problème : en effet, aujourd'hui, c'est le dernier utilisateur qui en manifeste le souhait qui prend le contrôle de la clé DTTV via son terminal de commande (tablette, etc.), interrompant possiblement un visionnage de contenu qui aurait été déjà initié par un autre utilisateur.

Il a été proposé d'inclure dans des systèmes de visionnage un mécanisme de priorité. Par exemple, le document WO 2012/009095 A2 décrit un système et procédé pour l'accès au téléviseur à partir de plusieurs dispositifs d'utilisateur, en instaurant un mécanisme de priorité entre les utilisateurs.

Cependant, le traitement du mécanisme de priorité est complexe et peut introduire une latence dans la restitution du contenu.

L'invention offre une solution ne présentant pas les inconvénients de l'état de la technique.

### L'invention

A cet effet, selon un aspect fonctionnel, l'invention a pour objet un procédé de gestion du téléchargement d'un contenu numérique disponible en téléchargement progressif sur un serveur de contenus dans un réseau de communication incluant un premier terminal, dit terminal maître, et au moins un second terminal. Un mode de réalisation est détaillé à l'appui de la revendication indépendante 1 et de ses dépendantes. D'autres modes de réalisation sont fournis à titre d'exemple.

Avantageusement, le terminal maître possède tous les droits sur le dispositif de téléchargement et aucune vérification n'est effectuée lorsqu'il requiert un contenu, ce qui lui permet notamment de ne pas être connecté lui-même au réseau WAN, ou de ne pas subir ses dérangements (si, par exemple, le fichier des droits utilisateurs tardait à lui être fourni via la passerelle).

Le maître, qui est par exemple le propriétaire de la clé TV, est prioritaire sur tous les autres utilisateurs. Le téléchargement d'un contenu requis par un autre terminal du réseau local que celui du maître ne peut ainsi pas interrompre le maître.

Par ailleurs, si un premier utilisateur est en train de télécharger un contenu via un dispositif de téléchargement et de le visualiser sur un dispositif de restitution de type téléviseur, de n'autoriser l'accès à un contenu à un second utilisateur que si celui-ci dispose d'une priorité supérieure à celle du terminal de l'utilisateur en cours de téléchargement. Avantageusement, il est possible via ce mécanisme d'instaurer une hiérarchie de priorités sur la clé DTTV et donc d'éviter que le dernier utilisateur arrivé dans le réseau local ne prenne brutalement le contrôle de la clé, sauf s'il possède la priorité la plus élevée.

Un Fichier des Droits Utilisateurs, regroupant les droits des utilisateurs du dispositif, peut être créé et modifié à n'importe quel moment. Il peut se trouver par exemple dans le WAN sur un serveur de fichiers, ou sur la passerelle de service ou sur l'un des terminaux du réseau local (disque dur, PC, etc.). Un utilisateur, privilégié ou non, inscrit par exemple les droits dans ce fichier à partir de son smartphone ou tout autre équipement relié à la passerelle du réseau local.

Selon une variante, le téléchargement est précédé d'une notification au terminal maître.

De cette manière, le maître pourra accepter, ou pas, d'autoriser le téléchargement du contenu, ce qui peut être avantageux notamment dans le cas d'un invité qui ne disposerait que de droits très restreints, ou que le maître autoriserait exceptionnellement à prendre le contrôle de la clé DTTV, même s'il n'est pas prioritaire.

L'invention concerne également un dispositif de gestion du téléchargement pour le téléchargement progressif d'un contenu numérique, une clé électronique incluant un dispositif de gestion du téléchargement, un système de gestion du téléchargement d'un contenu numérique, un programme d'ordinateur apte à être mis en œuvre pour le procédé de gestion du téléchargement., un support d'enregistrement lisible par un processeur de données sur lequel est enregistré un programme comprenant des instructions de code de programme pour l'exécution des étapes du procédé.

Ces dispositif, système, programme d'ordinateur, support d'enregistrement, présentent des caractéristiques et avantages analogues à ceux décrits précédemment en relation avec les procédés de téléchargement et de gestion.

L'invention sera mieux comprise à la lecture de la description qui suit, donnée à titre d'exemple et faite en référence aux dessins annexés.

### Description détaillée d'un exemple de réalisation illustrant l'invention

La figure 1 représente le contexte général d'un réseau local dans lequel un dispositif de restitution est associé à une clé DTTV dans un réseau local.
La figure 2 représente une architecture matérielle d'une clé électronique (DTTV) selon un mode de réalisation de l'invention.
La figure 3 représente un chronogramme des échanges entre deux terminaux et une clé électronique (DTTV) associée à un téléviseur selon un mode de réalisation de l'invention.

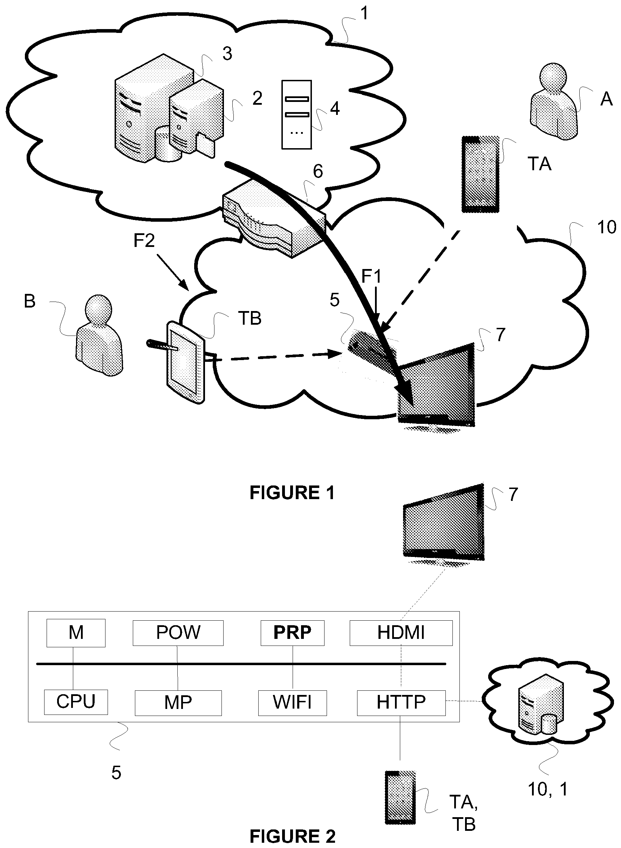

La figure 1 représente le contexte général d'un réseau local (10) dans lequel un dispositif de restitution est associé à un une clé DTTV (5).

Le réseau local (10) d'un utilisateur (A), dit « utilisateur principal », ou « maître » est connecté au réseau étendu (WAN, 1) via une passerelle de service (6).

On rappelle ici qu'un réseau local, aussi appelé réseau domestique, est un réseau informatique qui relie ensemble, avec ou sans fils, les terminaux d'une maison (ordinateurs, périphériques d'impression, de restitution, de stockage, etc.) aptes à communiquer ensemble. Un réseau domestique comporte généralement un équipement routeur, aussi communément appelé passerelle domestique, ou passerelle de service (6), élément intermédiaire assurant la redirection, ou routage, des paquets de données entre les différents terminaux et les réseaux qui lui sont connectés. Un tel réseau domestique connecte souvent les différents terminaux en utilisant une technologie sans fils WiFi ou filaire Ethernet, les deux types de support étant prévus pour des communications basés sur les protocoles de la famille IP (*Internet Protocol*), protocole de base pour les réseaux de type Internet et par extension, nom du réseau lui-même). A cet effet, la passerelle de service comporte une fonction de communication WiFi, ou point d'accès WiFi, qui lui permet de communiquer sans fils avec les terminaux du réseau. Par la suite, on entend par dispositif terminal, ou plus simplement « terminal », tout dispositif apte à se connecter à la passerelle (6), tel un ordinateur ou un dispositif du type téléviseur (TV), ordinateur personnel (PC), *Smartphone* (téléphone mobile intelligent), PDA (« Personnal Digital Assistant »), dispositif de téléchargement (DTTV), ou plus généralement tout dispositif apte à communiquer avec ou sans fils avec la passerelle de service.

Le contexte du réseau local domestique (10) est donné à titre d'exemple et pourrait être transposé aisément à celui d'un réseau d'entreprise.

Le réseau local (10) selon ce mode de réalisation de l'invention comprend deux terminaux TA et TB associés respectivement aux utilisateurs A et B, et un dispositif de restitution (7), ou plus simplement téléviseur (TV).

Dans la suite, on l'appellera simplement « le maître » l'utilisateur maître lui-même (A) ou son terminal (TA) et de même « l'invité » l'utilisateur invité (B) ou son terminal (TB). Le téléviseur est associé à une clé DTTV (5) connectée au réseau local (10) via la passerelle de service (6) chargée de télécharger les contenus sur le réseau WAN (1). Les terminaux du réseau local sont aptes à établir des connexions avec le WAN via la passerelle de service (6) qui lui est reliée par une liaison haut débit. Le réseau (10) est par exemple un réseau local IP et la liaison haut débit est de type ADSL (de l'anglais *Asymmetric Digital Subscriber Line*). Le réseau WAN (1) est également dans cet exemple de type IP et contient des serveurs (3) de contenus multimédia qui hébergent notamment des contenus numériques pour une mise à disposition des terminaux du réseau local (10) en mode de *streaming.* Le serveur de contenus (3) se trouve selon cet exemple dans le WAN (1) mais il pourrait, selon un autre exemple, être situé dans un réseau local, par exemple au niveau de la passerelle de service (6) ou de tout autre équipement capable d'héberger un tel serveur de contenus.

Sur la figure 1, la flèche pleine (F1) représente le chemin d'un contenu depuis le serveur de contenus (3) jusqu'au téléviseur (7), en passant par la passerelle de service (6) puis la clé DTTV (5).

Le terminal TA est par exemple un *smartphone.* Le terminal TB est par exemple une tablette électronique. Les terminaux TA et TB sont aptes tous deux à transmettre à la clé DTTV un ordre de téléchargement, comprenant une adresse de téléchargement à destination du serveur de contenus (3). La clé DTTV (5) accède au contenu sur le serveur et le service démarre effectivement, c'est-à-dire que la clé peut recevoir le contenu et la faire afficher sur le téléviseur, en utilisant typiquement une technique de type dit « streaming adaptatif » (HAS pour « HTTP Adaptive Streaming ») bien connue de l'homme du métier.

L'utilisateur maître (A) est par exemple celui qui a contracté l'abonnement relatif à la passerelle de service (6) auprès de l'opérateur de réseau propriétaire des serveurs (3) ; il est aussi selon cet exemple le propriétaire (maître) de la clé DTTV (5).

L'utilisateur B est, selon cet exemple, un invité du réseau local, par exemple un visiteur du maître A. Il possède moins de droits que A. Il n'est notamment pas prioritaire pour ce qui concerne l'accès à la clé TV.

On suppose dans cet exemple que A a commencé à visualiser un contenu à l'aide de la clé DTTV, qu'il pilote via son *smartphone* TA, par exemple il regarde une chaîne appelée CHA. Selon l'état de la technique actuel, si l'utilisateur B décide de visualiser un contenu, par exemple sur la chaîne CHB, rien ne l'empêche, à partir du moment où il a installé l'application adéquate de pilotage de la clé DTTV sur son terminal (TB), d'accéder à la clé DTTV et de lui transmettre l'adresse d'un contenu d'une chaîne B à télécharger. L'utilisateur 1 perd alors le contrôle de la clé et son visionnage en cours.

Un « Fichier des Droits Utilisateurs », abrégé FDU, (4) a été préalablement installé sur un serveur de fichiers (2) dans le WAN. L'utilisateur maître (A) inscrit les droits dans ce fichier par exemple à partir de son smartphone (TA), ou tout autre équipement relié à la passerelle du réseau local. Le serveur de fichiers (2) peut être confondu avec le serveur de contenus (3) ou en être distinct. Le fichier peut alternativement être stocké n'importe où dans le réseau étendu, ou sur la passerelle de service (6) ou sur l'un des terminaux du réseau local (disque dur, PC, etc.)

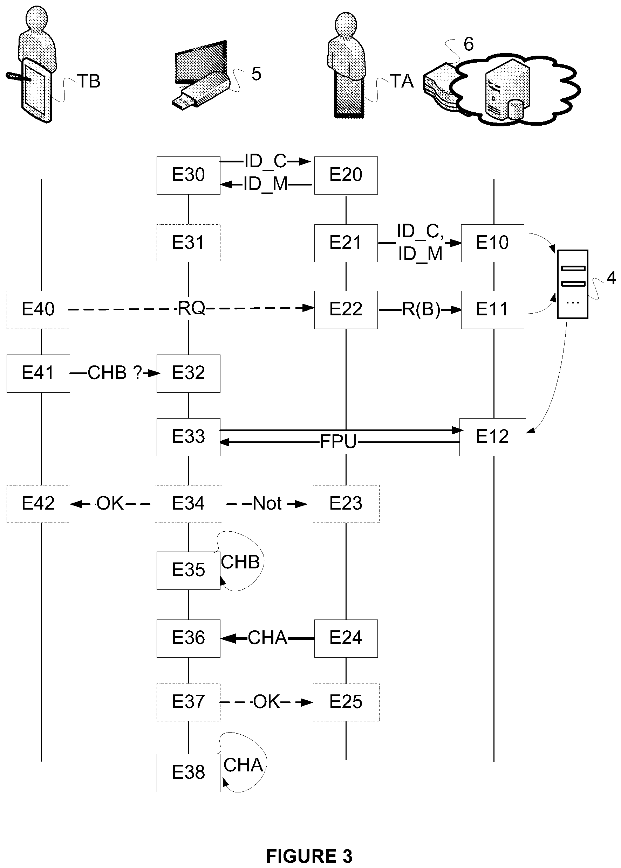

Un module logiciel de gestion des priorités (PRP) selon l'invention a été installé sur la clé DTTV. Ce module de gestion est apte à récupérer les droits inscrits dans le fichier des droits utilisateurs (4) associés à la clé DTTV, puis en fonction des droits inscrits, d'accepter ou refuser l'accès du terminal (TB) à la clé DTTV selon un procédé qui sera décrit plus tard à l'appui de la figure 3.

Dans cet exemple, l'invité dispose de droits plus restreints que le maître : notamment, il ne peut commander la clé TV que si l'utilisateur A lui en a donné le droit et n'est pas en train de l'utiliser à ce moment-là. Sa demande de contenu CHB selon l'exemple sera donc refusée tant que A est en train de télécharger et restituer le contenu CHA.

La figure 2 représente une architecture matérielle d'un dispositif hébergeant un module de téléchargement selon un mode de réalisation l'invention, par exemple la clé DTTV (5) de la figure 2.

Le dispositif comprend des mémoires M articulées autour d'un processeur CPU. Il communique avec le réseau local (10) via le module de communication (WiFi) qui lui permet de se connecter de préférence sans fils (par exemple, mais de manière non limitative, via un canal radio de type WiFI) aux terminaux du réseau, notamment les dispositifs mobiles (TA, TB). Il est alimenté via une interface série de type USB (POW). Il comporte aussi :
- un module d'interface (HDMI) capable de s'interfacer physiquement et logiquement avec le téléviseur (7) pour transmission du contenu multimédia (audio et vidéo) décodé et échange de commandes de base en provenance du mobile (mode silence, augmentation du volume, diminution du volume, etc.)
- un module de gestion des priorités (PRP) selon l'invention, chargé de la gestion des droits de la clé DTTV selon le mode de réalisation décrit précédemment à l'appui de la figure 1. Ce module est notamment capable, en relation avec ce mode de réalisation de l'invention, de télécharger le fichier des droits utilisateurs (4, FDU) à partir du WAN via la passerelle de service, vérifier les droits associés aux utilisateurs et gérer de ce fait les conflits entre les accès qui lui parviennent, à savoir les demandes de contenus, qui peuvent être simultanées, en provenance de TA et TB.
- un « media player » (MP) capable de restituer (recevoir, décoder, préparer) les flux en mode de *streaming* et de les délivrer au dispositif de restitution (TV) ; le « media player » comporte entre autres un ensemble de décodeurs (audio, vidéo, etc.) aptes à décoder les contenus multimédia, ainsi qu'une interface de communication avec le dispositif mobile, apte à interpréter les ordres en provenance de celui-ci.
- un module de communication de type HTTP pour assurer les communications client-serveur de type HTTP, notamment dans le but d'échanger des données
   - avec les terminaux mobiles (TA, TB) du réseau local (échange des identités, réception des commandes de streaming, acquittements, etc.)
   - avec le serveur de contenus et de droits dans le WAN, dans le but notamment d'échanger les fichiers (4) relatifs aux contenus numériques et aux droits des terminaux des utilisateurs sur la clé de téléchargement.

La figure 3 représente un chronogramme des échanges entre un dispositif de restitution (TV, 7) connecté à une clé DTTV (5), pilotable à distance par le smartphone (TB) ou la tablette (TA) des utilisateurs respectifs B et A.

On rappelle que dans le contexte de ce mode de réalisation, A est le maître de la clé DTTV, et B est un invité auquel A peut donner certains droits sur la clé DTTV, ces droits étant inscrits dans le fichier (4) des droits utilisateurs.

Lors des étapes E20 et E30 d'initialisation, un utilisateur principal (selon l'exemple, le maître A) est associé de manière unique à la clé DTTV (5).
- La clé TV possède un identifiant unique, noté ID_C, correspondant par exemple à son O.U.I (pour *Organizationally Unique Identifier*), un identifiant unique formé à partir notamment de son adresse physique (adresse MAC pour *Media Access Control*) et de son numéro de série.
- L'utilisateur possède lui aussi un identifiant unique noté ID_M, par exemple son identifiant auprès de l'opérateur de services à qui il a acheté la clé DTTV (numéro de client, etc.) et qui l'identifie de manière univoque.

Par échange de ces identifiants, une clé DTTV est attachée à un utilisateur maître, ici A, de manière unique. Cette étape se produit, dans ce mode de réalisation de l'invention une seule fois, lors de l'achat de la clé par exemple. Alternativement, elle peut se reproduire en cas de problème, ou de réinitialisation, etc. Les deux appareils étant associés, la clé prend le contrôle du téléviseur et provoque par exemple, si aucun autre appareil n'est actif sur une autre entrée HDMI, l'affichage d'informations relatives aux contenus disponibles en *streaming.*

Lors de l'étape E21, le terminal TA de l'utilisateur A se connecte au WAN (1) via la passerelle de service (6) en lui fournissant les identifiants de l'association (ID_C, ID_M). Cette association est transmise par la passerelle de service au serveur de fichiers (2) du WAN. Un programme de gestion des fichiers de droits des utilisateurs (FDU) sur le serveur crée un fichier de droits (4) pour cette association.

Lors d'une étape E31, une image de l'association est stockée dans une mémoire de la clé DTTV pour le fonctionnement en mode non connecté. Il peut s'agir d'un stockage en mémoire ROM, ou EPROM, etc. Il faut noter que si cette étape n'était pas effectuée, la clé DTTV devrait forcément dans la suite se connecter au serveur de droits (2) dans le WAN pour récupérer le fichier des droits (4), avant de télécharger un contenu, ce qui pourrait être plus long et complexe.

Lors d'une étape E22 de prédéfinition des accès, l'utilisateur A, qui vient par exemple d'acquérir la clé TV et de lui être associé en tant que maître aux étapes précédentes, se connecte à la passerelle de service via une connexion IP (WiFi, Bluetooth, etc.) pour définir les droits associés à la clé DTTV.

Cette connexion peut être faite de manière spontanée, ou parce qu'un utilisateur B invité a effectué lors d'une étape E40 (facultative) une demande d'autorisation d'accès à la clé DTTV. Cette demande peut se faire par exemple au travers d'une application mobile s'exécutant sur le terminal TB de B, par l'enchaînement des étapes suivantes, donné à titre indicatif et nullement limitatif :
40.1 Lancement de l'application mobile sur le terminal TB de B ;
40.2 Etape de découverte de la clé DTTV dans le réseau local ;
40.3 Sélection de la clé DTTV par le terminal B ;
40.4 Réception d'un message de type « vous n'êtes pas autorisé », « voulez-vous demander l'accès ? »
40.5 Confirmation de la demande d'accès et envoi d'une notification au maître (A) (RQ) par exemple via envoi de SMS ou tout autre procédé de notification entre applications mobiles sur son terminal mobile (TA).
La demande est reçue par le maître A au cours de l'étape E22 ; le maître peut alors refuser ou accepter la demande d'autorisation pour l'individu identifié dans la requête (B). Pour cela, il remplit le fichier des droits utilisateurs pour B et lui renvoie optionnellement un message d'accord ou de désaccord. Les droits inscrits dans le fichier sont notés R(B) sur la figure 3.

De manière générale, A prédéfinit, au cours de cette étape ou indépendamment, l'ensemble des membres autorisés à accéder à la clé TV, par exemple sous forme d'une liste de membres invités, et configure les droits, priorités et profils pour chacun des invités. Un exemple de contenu d'une telle table (TDU - table des droits utilisateurs) qui se trouve dans le fichier FDU est illustré ci-dessous ; elle comporte :
- l'identifiant de la clé DTTV et du maître (première ligne de l'exemple) qui permet notamment d'accéder au fichier,
- puis une ligne par utilisateur potentiel déclaré par le maître, comprenant :
   1. une colonne « droits »
   2. une colonne « priorités » pour indiquer le niveau de priorité. Cette colonne est facultative car il est facile de déduire les priorités du type de droits.
   3. une colonne « profils » pour indiquer le profil de l'utilisateur : autorisé, non autorisé, autorisé sur demande, autorisé pour certains types de contenus, autorisé sous contrôle parental, etc.

Ainsi, selon cet exemple :
- A est le maître de la clé, il possède par défaut les droits :
   ∘ d'administration de la clé DTTV ;
   ∘ de gestion (en lecture et en écriture) du fichier FDU des droits utilisateurs ;
   ∘ d'accès illimité et prioritaire aux contenus.
- C est « super-utilisateur », c'est par exemple un membre de la famille ; il possède les mêmes droits que A, mais n'est pas prioritaire vis-à-vis de A (pour l'accès aux contenus, notamment) et ne peut pas modifier/supprimer les droits du maître ;
- B possède des droits d'utilisateur « invité » avec accès non prioritaire aux contenus, en seulement résolution standard (SD) pour ne pas consommer trop de bande passante dans le réseau local ;
- D est limité par le contrôle parental aux contenus réservés aux plus de 12 ans ;
- E est limité à certaines plages horaires ;
- F n'a pas le droit de se servir de la clé DTTV.

**Table 1 : exemple de Table des Droits Utilisateurs (TDU, 4)**

| ***ID_C = "clé Orange 666777" ⇔ ID_M* = "01607080910"** | | | |
|---|---|---|---|
| ***Utilisateur*** | ***Type de droit*** | ***Priorité*** | ***Accès possibles*** |
| A ( 0607080910) | Maître | 5 | Administrateur ; tous les droits |
| B (0611121314) | Invité | 1 | Droits d'accès aux contenus, non prioritaire, SD |
| C (4432313029) | Super-utilisateur | 4 | Administrateur ; tous les droits sauf concernant le maître |
| D (33754XXXXXX) | Invité | 2 | Droits d'accès aux contenus autorisés +12 ans |
| E (0666XXXXXX) | Invité | 2 | Droits d'accès aux contenus de 17h à 21h |
| F (08XXXXXXXX) | Accès Refusé | 0 | --- (aucun droit) |

Lors d'une tentative d'accès à un contenu, le profil correspondant de l'utilisateur est consulté : par exemple, le terminal D étant autorisé pour certains contenus, son profil est examiné à chaque demande pour déterminer s'il est autorisé ou non à visualiser ce type de contenu (s'il n'est pas interdit aux moins de 12 ans).

Le profil du maître n'est pas examiné lors d'un accès.

Les conflits potentiels entre les utilisateurs sont résolus à l'aide de ces mêmes priorités et profils qui permettent de créer aisément une hiérarchie de droits : ainsi, selon un exemple d'implémentation, personne ne peut interrompre le maître, puis viennent les super-utilisateurs, puis les invités avec un niveau de priorité qui peut être optionnellement précisé dans le fichier (par exemple : le maître a une priorité 5, les super-utilisateurs une priorité 4, les invités une priorité 1 ou 2, et seul un utilisateur de priorité supérieure peut prendre le contrôle de la clé DTTV si elle est en cours d'utilisation par un terminal de priorité inférieure.)

Selon une variante non représentée, le maître laisse à l'invité le soin de gérer son profil, c'est-à-dire d'écrire dans la table des droits utilisateurs (TDU).

Lors d'une étape E41, B, invité selon l'exemple, soumet un accès pour visualiser un contenu grâce à la clé DTTV (5). Il choisit, selon cet exemple, de recevoir un programme en streaming, par exemple un canal « CHB ». Cette requête est reçue à l'étape E32 par la clé DTTV qui l'analyse.

Selon une étape E33 facultative, la clé DTTV charge à partir du serveur le fichier des droits contenant la table des droits utilisateurs (TDU). Toute variante à la portée de l'homme du métier pourra être utilisée pour que la clé DTTV bénéficie toujours d'une table à jour :
- selon une première variante, la table TDU est « poussée » vers le client HTTP sur la clé dès qu'elle est modifiée sur le serveur et que la clé est connectée.
- selon une seconde variante, c'est la clé DTTV qui interroge le serveur de manière périodique (en anglais, ce mode est appelé *polling*), pour prendre en compte des modifications éventuelles du fichier contenant la table TDU.

Lors d'une étape E34, la clé DTTV consulte la table des droits utilisateurs qu'elle a en mémoire (soit parce qu'elle l'a téléchargée sur le serveur, soit parce que sa version mémorisée est à jour) et selon les droits lus et l'état en cours de la clé, accède ou non à la requête de l'invité, c'est-à-dire qu'elle lui transmet optionnellement un acquittement lors d'une étape suivante E34, puis commence le téléchargement et la visualisation du contenu requis au cours d'une étape E35 (restitution du canal CHB).

Selon une variante de l'étape E34, la nouvelle requête (celle de B) est notifiée (Not) au maître (par exemple, sous forme de SMS ou par le biais de l'application sur le *smartphone*) qui accepte ou non la requête.

Lors d'une étape E24, le terminal TA du maître A requiert un contenu (par exemple une chaîne CHA). La clé DTTV analyse la requête (E34). La clé DTTV passe sous le contrôle de A, au détriment de B qui a moins de droits, et joue le canal CHA (E38).

On notera que, dans le contexte d'une offre commerciale associée à la passerelle de service, un opérateur peut prédéfinir les accès ; selon un exemple, tous les mobiles associés à une offre particulière (« open ») peuvent accéder au service avec un niveau supérieur (en tant que super-utilisateur) à celui d'un invité, et des règles simples peuvent être associés aux membres du réseau local : pas de contrôle parental prédéfini pour les membres, pas de profils prédéfinis pour la personnalisation de la recommandation, des favoris, etc.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Notamment, ces modes de réalisation peuvent être facilement transposés au cas où le dispositif mobile (TA) se positionne comme point d'accès au réseau en mode de *tethering.* Dans ce cas, le dispositif mobile remplace la passerelle de service (6) mais les échanges ne sont pas modifiés.

## Revendications

1. Procédé de gestion du téléchargement d'un contenu numérique (CHA, CHB) disponible en téléchargement progressif sur un serveur de contenus (3) dans un réseau de communication (1, WAN, 10, LAN), ledit serveur de contenus étant accessible par un dispositif de téléchargement (DTTV) via une passerelle de service (4,6) d'un réseau local (10) incluant un premier terminal, dit terminal maître (TA), et au moins un second terminal (TB), le procédé comportant les étapes suivantes sur le dispositif de téléchargement :
- association (E30, E20) unique (ID_C, ID_M) entre le terminal maître (TA), et le dispositif de téléchargement (5, DTTV) ;
- mémorisation (E31) de ladite association dans le dispositif de téléchargement ;
- affectation audit terminal maître d'une priorité d'utilisation du dispositif de téléchargement la plus élevée ;
- réception d'une requête (E32) de téléchargement progressif d'un premier contenu numérique (CHB) en provenance d'un premier terminal requérant ;
- réception d'une requête (E36) de téléchargement progressif d'un second contenu numérique (CHA) en provenance d'un second terminal requérant;
- pour un terminal requérant qui n'est pas le terminal maître,
- obtention (E33) d'un fichier des droits utilisateurs (FDU, TDU) comprenant au moins une donnée de priorité (PTB) du terminal requérant relative à l'utilisation du dispositif de téléchargement (5, DTTV) ;
- comparaison (E33, E36) de la donnée de priorité du premier terminal (PTA) avec la donnée de priorité du second terminal (PTB), afin de définir le terminal prioritaire ;
- téléchargement (E35, E38) du contenu numérique (CHA, CHB) requis par le terminal requérant prioritaire;

2. Procédé selon la revendication 1, **caractérisé en ce que** le téléchargement est précédé d'une notification (E34) au terminal maître si le terminal requérant n'est pas le terminal maître.

3. Dispositif de gestion du téléchargement (5, DTTV) d'un contenu numérique disponible en téléchargement progressif sur un serveur de contenus (3) dans un réseau de communication (1, 10), ledit serveur de contenus étant accessible via une passerelle de service (4,6) d'un réseau local (10) incluant un premier terminal, dit terminal maître (TA), et au moins un second terminal, le dispositif comportant :
- un module pour générer une association unique (ID_C, ID_M) entre le terminal maître (TA), et le dispositif de téléchargement (5, DTTV) ;
- un module de mémorisation de ladite association dans le dispositif de téléchargement,
- un module pour affecter audit terminal maître une priorité d'utilisation du dispositif de téléchargement la plus élevée ;
- un module de réception d'une requête de téléchargement progressif d'un premier contenu numérique (CHB) en provenance d'un premier terminal requérant et d'une requête de téléchargement progressif d'un second contenu numérique (CHA) en provenance d'un second terminal requérant ;
- un module d'obtention (E33) d'un fichier des droits utilisateurs (FDU, TDU) comprenant au moins une donnée de priorité du terminal requérant, relative à l'utilisation du dispositif de téléchargement ;
- un module de comparaison (E33, E36) de la donnée de priorité du premier terminal (PTA) avec la donnée de priorité du second terminal (PTB), afin de définir le terminal prioritaire ;
- un module de téléchargement du contenu numérique requis par le terminal requérant prioritaire .

4. Clé électronique (DTTV) incluant un dispositif de gestion du téléchargement selon la revendication 3.

5. Programme d'ordinateur comportant des instructions de code pour la mise en oeuvre du procédé de gestion du téléchargement conforme à la revendication 1, lorsque celle-ci est exécutée par un processeur.

## Patentansprüche

1. Verfahren zur Verwaltung des Herunterladens eines zum progressiven Herunterladen verfügbaren digitalen Inhalts (CHA, CHB) auf einem Inhaltsserver (3) in einem Kommunikationsnetzwerk (1, WAN, 10, LAN), wobei auf den Inhaltsserver von einer Herunterladevorrichtung (DTTV) über ein Service-Gateway (4, 6) eines lokalen Netzwerks (10) zugegriffen werden kann, das ein erstes Endgerät, Master-Endgerät (TA) genannt, und mindestens ein zweites Endgerät (TB) umfasst, wobei das Verfahren die folgenden Schritte auf der Herunterladevorrichtung aufweist:
- eindeutige (ID_C, ID_M) Verbindung (E30, E20) zwischen dem Master-Endgerät (TA) und der Herunterladevorrichtung (5, DTTV);
- Speichern (E31) der Verbindung in der Herunterladevorrichtung;
- Zuweisung einer höchsten Benutzungspriorität der Herunterladevorrichtung zum Master - Endgerät;
- Empfang einer Anforderung (E32) eines progressiven Herunterladens eines ersten digitalen Inhalts (CHB) von einem ersten anfordernden Endgerät;
- Empfang einer Anforderung (E36) eines progressiven Herunterladens eines zweiten digitalen Inhalts (CHA) von einem zweiten anfordernden Endgerät;
- für ein anforderndes Endgerät, das nicht das Master-Endgerät ist,
- Erhalt (E33) einer Datei der Benutzerrechte (FDU, TDU), die mindestens einen Prioritätsdatenwert (PTB) des anfordernden Endgeräts bezüglich der Benutzung der Herunterladevorrichtung (5, DTTV) enthält;
- Vergleich (E33, E36) des Prioritätsdatenwerts des ersten Endgeräts (PTA) mit dem Prioritätsdatenwert des zweiten Endgeräts (PTB), um das prioritäre Endgerät zu definieren;
- Herunterladen (E35, E38) des vom prioritären anfordernden Endgerät angeforderten digitalen Inhalts (CHA, CHB).

2. Verfahren nach Anspruch 1, **dadurch gekennzeichnet, dass** dem Herunterladen eine Benachrichtigung (E34) an das Master-Endgerät vorausgeht, wenn das anfordernde Endgerät nicht das Master-Endgerät ist.

3. Vorrichtung zur Verwaltung des Herunterladens (5, DTTV) eines zum progressiven Herunterladen verfügbaren digitalen Inhalts auf einem Inhaltsserver (3) in einem Kommunikationsnetzwerk (1, 10), wobei auf den Inhaltsserver über ein Service-Gateway (4, 6) eines lokalen Netzwerks (10) zugegriffen werden kann, das ein erstes Endgerät, Master-Endgerät (TA) genannt, und mindestens ein zweites Endgerät (TB) umfasst, wobei die Vorrichtung aufweist:
- ein Modul zur Generierung einer eindeutigen Verbindung (ID_C, ID_M) zwischen dem Master-Endgerät (TA) und der Herunterladevorrichtung (5, DTTV);
- ein Speichermodul der Verbindung in der Herunterladevorrichtung,
- ein Modul zur Zuweisung einer höchsten Benutzungspriorität der Herunterladevorrichtung zum Master - Endgerät;
- ein Empfangsmodul einer Anforderung eines progressiven Herunterladens eines ersten digitalen Inhalts (CHB) von einem ersten anfordernden Endgerät und einer Anforderung eines progressiven Herunterladens eines zweiten digitalen Inhalts (CHA) von einem zweiten anfordernden Endgerät;
- ein Modul des Erhalts (E33) einer Datei der Benutzerrechte (FDU, TDU), die mindestens einen Prioritätsdatenwert des anfordernden Endgeräts bezüglich der Benutzung der Herunterladevorrichtung enthält;
- ein Vergleichsmodul (E33, E36) des Prioritätsdatenwerts des ersten Endgeräts (PTA) mit dem Prioritätsdatenwert des zweiten Endgeräts (PTB), um das prioritäre Endgerät zu definieren;
- ein Modul zum Herunterladen des vom prioritären anfordernden Endgerät angeforderten digitalen Inhalts.

4. Elektronischer Schlüssel (DTTV), der eine Verwaltungsvorrichtung des Herunterladens nach Anspruch 3 umfasst.

5. Computerprogramm, das Codeanweisungen für die Durchführung des Verwaltungsverfahrens des Herunterladens gemäß Anspruch 1 aufweist, wenn dieses von einem Prozessor ausgeführt wird.

## Claims

1. Method for managing the downloading of a digital content (CHA, CHB) available by progressive downloading from a contents server (3) in a communication network (1, WAN, 10, LAN), said contents server being accessible by a downloading device (DTTV) via a service gateway (4,6) of a local area network (10) including a first terminal, referred to as the master terminal (TA), and at least a second terminal (TB), the method comprising the following steps on the downloading device:
- definition (E30, E20) of a unique association (ID_C, ID_M) between the master terminal (TA) and the downloading device (5, DTTV);
- storage (E31) of said association in the downloading device;
- assignment of the highest priority of use of the downloading device to said master terminal;
- reception of a request (E32) for progressive downloading of a first digital content (CHB) originating from a first requesting terminal;
- reception of a request (E36) for progressive downloading of a second digital content (CHA) originating from a second requesting terminal;
- for a requesting terminal that is not the master terminal,
- obtaining (E33) of a file of user rights (FDU, TDU) comprising at least one priority datum (PTB) of the requesting terminal, said datum relating to the use of the downloading device (5, DTTV);
- comparison (E33, E36) of the priority datum of the first terminal (PTA) with the priority datum of the second terminal (PTB), so as to define the terminal having priority;
- downloading (E35, E38) of the digital content (CHA, CHB) requested by the requesting terminal having priority.

2. Method according to Claim 1, **characterized in that** the downloading is preceded by a notification (E34) to the master terminal if the requesting terminal is not the master terminal.

3. Device for managing the downloading (5, DTTV) of a digital content available by progressive downloading from a contents server (3) in a communication network (1, 10), said contents server being accessible via a service gateway (4,6) of a local area network (10) including a first terminal, referred to as the master terminal (TA), and at least a second terminal, the device comprising:
- a module for generating a unique association (ID_C, ID_M) between the master terminal (TA) and the downloading device (5, DTTV);
- a module for storing said association in the downloading device;
- a module for assigning the highest priority of use of the downloading device to said master terminal;
- a module for receiving a request for progressive downloading of a first digital content (CHB) originating from a first requesting terminal and a request for progressive downloading of a second digital content (CHA) originating from a second requesting terminal;
- a module for obtaining (E33) a file of user rights (FDU, TDU) comprising at least one priority datum of the requesting terminal, said datum relating to the use of the downloading device;
- a module for comparing (E33, E36) the priority datum of the first terminal (PTA) with the priority datum of the second terminal (PTB), so as to define the terminal having priority;
- a module for downloading the digital content requested by the requesting terminal having priority.

4. Electronic key (DTTV) including a device for managing downloading according to Claim 3.

5. Computer program comprising code instructions for the implementation of the method for managing downloading according to Claim 1, when the latter is executed by a processor.
